# EUROPEAN PATENT APPLICATION

(11) **EP 2 913 517 A1**
(43) Date of publication of application: **02.09.2015**
(21) Application number: 15156207.1
(22) Date of filing: 24.02.2015
(51) Int. Cl.: F02N 11/08, F02P 5/15

(54) **Stop and start control device for internal combustion engine**

(30) Priority: 28.02.2014 JP 2014039723
(71) Applicant: Toyota Jidosha Kabushiki Kaisha, Toyota-shi, Aichi-ken 471-8571 (JP)
(72) Inventor: Enomoto, Hiroshi, TOYOTA-SHI, AICHI-KEN, 471-8571 (JP); Furuya, Yoshihiro, TOYOTA-SHI, AICHI-KEN, 471-8571 (JP)
(74) Representative: Intès, Didier Gérard André

(57) **Abstract**

A stop and start control device for an internal combustion engine is configured to perform an automatic stop control for stopping combustion in the internal combustion engine while a vehicle is travelling. The stop start control device is configured to initiate a restart operation during vehicle travel when a restart request generates before the vehicle stops in a state in which the combustion in the internal combustion engine has been stopped by the automatic stop control. The restart operation during vehicle travel is a restart operation for the internal combustion engine while the vehicle is travelling. The stop and start control device is configured to set an ignition timing of a first ignition in the restart operation during vehicle travel to an ignition timing advanced from an ignition timing of a second ignition in the restart operation during vehicle travel.

## Description

### BACKGROUND OF THE INVENTION

The present invention relates to a stop and start control device for an internal combustion engine.

Japanese Laid-Open Patent Publication No. 2010-242563 describes a stop and start control device for an internal combustion engine that automatically stops combustion of the internal combustion engine during deceleration at a low speed that can lead to the vehicle stopping. Then, when the accelerator pedal is depressed to generate a restart request during the deceleration at which the combustion is stopped, the control device starts a restart operation during vehicle travel. The restart operation during vehicle travel refers to a restart operation of the internal combustion engine while the vehicle travels. When the driver does not request a rapid acceleration and when the stop and start control device determines that the suppression of vehicle vibration should be prioritized, the stop and start control device sets the ignition timing in the restart operation during vehicle travel to an ignition timing retarded from the ignition timing before the restart request is generated. This operation suppresses the torque generated by combustion and moderates the increase in the engine speed. This operation suppresses vehicle vibration caused by the restart operation during vehicle travel.

However, when the restart operation during vehicle travel is initiated in a state in which the engine speed is lower than resonance rotational speed range, which is an engine speed range where the resonance in the engine occurs (for example, 300rpm to 400rpm), the engine speed rises to pass though the resonance rotational speed range.

According to the stop and start control device described in the above publication, when the control device determines that the suppression of the vehicle vibration should be prioritized, the speed of raising the engine speed is lowered by the reduction of the engine output due to the retardation of the ignition timing. This prolongs a time period required for the engine speed passing through the resonance rotational speed range. Thus, the resonance in the internal combustion engine is likely to occur.

### SUMMARY OF THE INVENTION

It is an objective of the present invention to provide a stop and start control device for an internal combustion engine capable of suppressing the occurrence of resonance in the internal combustion engine when a restart operation during vehicle travel is performed.

To achieve the foregoing objective, a stop and start control device for an internal combustion engine is configured to perform an automatic stop control for stopping combustion in the internal combustion engine while a vehicle is travelling. The stop start control device is configured to initiate a restart operation during vehicle travel when a restart request generates before the vehicle stops in a state in which the combustion in the internal combustion engine has been stopped by the automatic stop control. The restart operation during vehicle travel is a restart operation for the internal combustion engine while the vehicle is travelling. The stop and start control device is configured to set an ignition timing of a first ignition in the restart operation during vehicle travel to an ignition timing advanced from an ignition timing of a second ignition in the restart operation during vehicle travel.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block diagram illustrating the relationship between a control unit and an internal combustion engine, which is a target to be controlled, and the relationship between the control unit and various sensors, according to one embodiment of the stop and start control device for the internal combustion engine of the present invention;
Fig. 2 is a flowchart showing the flow of process of the ignition timing control during restart that is performed by the control unit of Fig. 1;
Fig. 3A is a time chart showing an example of the change in the ignition timing that is set through the ignition timing control during restart shown in Fig. 2;
Fig. 3B is a time chart showing the change in the engine speed;
Fig. 4A is a time chart showing another example of the change in the ignition timing that is set through the ignition timing control during restart; and
Fig. 4B is a time chart showing the change in the engine speed.

### DETAILED DESCRIPTION OF THE INVENTION

One embodiment of a stop and start control device for an internal combustion engine will be described. This embodiment embodies the stop and start control device for an internal combustion engine as a control unit that performs overall control of the internal combustion engine mounted on a vehicle.

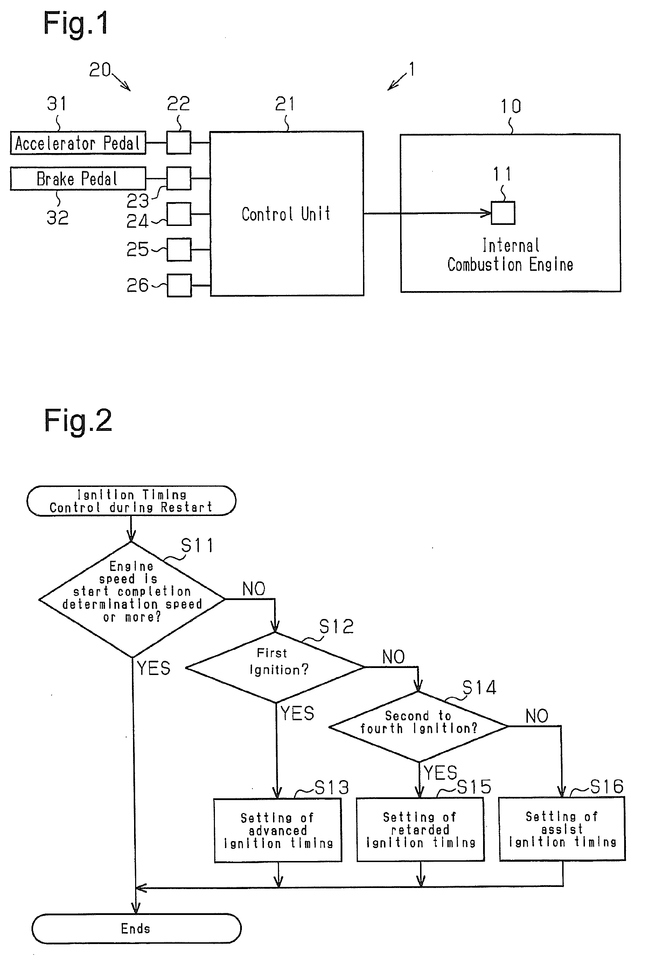

As shown in Figure 1, a vehicle 1 includes an internal combustion engine 10, the internal combustion engine control system 20, an accelerator pedal 31, and a brake pedal 32. The internal combustion engine control system 20 includes a control unit 21 that performs overall control of the internal combustion engine 10, various sensors 22 to 26 for detecting operation states of the internal combustion engine 10.

The internal combustion engine control system 20 includes the various sensors 22-26 such as a throttle opening degree sensor 24 for detecting a throttle opening, which is an opening degree of the electronically controlled throttle valve (not shown), a vehicle speed sensor 25 for detecting a speed of the vehicle 1, and a crank position sensor 26 for detecting an engine speed, which is a rotational speed of the crankshaft (not shown). In addition, the internal combustion engine control system 20 includes an accelerator pedal position sensor 22 for detecting an operation signal corresponding to an amount of depression of the accelerator pedal 31 by the driver, and a brake pedal position sensor 23 for detecting an operation signal corresponding to an amount of depression of the brake pedal 32 by the driver.

The internal combustion engine 10, for example, has four cylinders (not shown) including first to fourth cylinders. Each of the four cylinders is provided with a spark plug 11, which is operative to perform the ignition based on the ignition timing set by the control unit 21.

The control unit 21 has, for example, a microcontroller. The control unit 21 performs a plurality of control programs stored in the storage unit for the overall control of the internal combustion engine 10. As an example, the control unit 21 controls a fuel injection amount, an intake air amount, ignition timing and the like in the internal combustion engine 10 in accordance with the detection signals and the operation signals of the various sensors 22 to 26. The control unit 21 is operative as the stop and start control device that performs an automatic stop control and an automatic start control to be described later by performing a plurality of control programs.

To improve the fuel economy of the vehicle 1, the control unit 21 performs the automatic stop control for stopping the combustion of the internal combustion engine 10 while the vehicle is travelling at a low speed that can lead to the vehicle stopping, that is, during deceleration that can lead to the vehicle stopping.

Specifically, during the travel of the vehicle 1, the control unit 21 determines whether the automatic stop request has been generated based on the following conditions. For example, the control unit 21 determines that the depression of the accelerator pedal 31 is released, the depression of the brake pedal 32 is performed, and the vehicle 1 is in a predetermined vehicle speed or less. The control unit 21 determines that the automatic stop request generates when all these three conditions continue to meet over a predetermined time.

Then, based on the determination that the automatic stop request generates, the control unit 21 stops the fuel injection and the ignition of the spark plug 11 to stop the combustion of the internal combustion engine 10.

Then, when the driver performs an operation to try to re-accelerate the vehicle 1 while travelling, or when the driver performs an operation to try to start the vehicle 1 during stopping, the control unit 21 determines that the restart request is generated and performs the automatic restart control to restart the internal combustion engine 10. The control unit 21 determines that the restart request is generated based on the state where the depression of the brake pedal 32 is released and the depression of the accelerator pedal 31 is performed.

Based on the determination that the restart request is generated during the vehicle stopping, the control unit 21 performs a restart operation during vehicle stopping as the automatic start control. Otherwise, based on the determination that the restart request is generated before the vehicle is stopped, the control unit 21 performs a restart operation during vehicle travel as the automatic start control. In either restart operation, the control unit 21 restarts the fuel injection and the ignition of the spark plug 11 to restart the internal combustion engine 10.

When the vehicle starts from the stopped state, it is desirable to promptly increase the engine speed to complete the engine start in a short period of time. Therefore, the control unit 21 sets the ignition timing of the ignition in the restart operation during vehicle stopping to an ignition timing that is advanced as much as possible so as to increases the torque produced by the combustion as much as possible. According to this operation, the engine speed rapidly increases and reaches a start completion determination speed in a short period of time. The control unit 21 determines the completion of the engine start when the engine speed reaches the start completion determination speed.

When the driver starts to travel the vehicle 1, the driver releases the depression of the brake pedal 32 that has been performed to stop the vehicle 1. Typically, when the depression of the brake pedal 32 is released, the braking force can be solved along with the release of the depression. However, when performing the restart operation during vehicle stopping, the control unit 21 performs control to maintain the braking force even after the operation of depressing the brake pedal 32 is released. Then, the control unit 21 releases the braking force, which has been maintained, after the completion of the engine start. Thus, in the restart operation during vehicle stopping, since the braking force suppresses the start of the vehicle, a shock is less likely to occur in the vehicle 1 even when the engine speed of the internal combustion engine 10 increases with the restart operation during vehicle stops.

When the restart control during vehicle travel is performed, that is, when the acceleration request is generated while the vehicle travels, it is desirable that the vehicle 1 accelerates rapidly based on the amount of depression of the accelerator pedal 31 by the driver.

Therefore, when performing the restart operation during vehicle travel, the control unit 21 does not perform a control to maintain the braking force such as in the restart control during vehicle stops. Thus, the vehicle 1 accelerates according to the amount of depression of the accelerator pedal 31 by the driver after the completion of the engine start. However, in this case, the braking force does not suppress the speed of the vehicle 1 from being rapidly increased. Thus, generation of the vehicle vibration, which is a shock in the vehicle 1, is a concern.

In order to suppress the vehicle vibration in the vehicle 1, the control unit 21 performs an ignition timing control during restart that changes ignition timing depending on the number of times of the ignition from when the restart operation during vehicle travel starts. By performing the ignition timing control during restart, the control unit 21 reduces a period of time required for the engine speed passing through the resonance rotational speed range. This operation suppresses the occurrence of the resonance, which lead to the shock in the vehicle 1 at the time of restarting the internal combustion engine 10.

In the ignition timing control during restart, the control unit 21 sets an ignition timing of the first ignition, the ignition timing of the second to fourth ignitions and the ignition timing of the fifth and subsequent ignitions respectively to different ignition timings in the restart operation during vehicle travel.

Specifically, the control unit 21 sets the ignition timing of the first ignition in the restart operation during vehicle travel to an advanced ignition timing. The advanced ignition timing is an ignition timing retarded from the MBT (optimum ignition timing) and relatively advanced in the ignition timings to be set through the ignition timing control during restart.

Therefore, the internal combustion engine 10 increases the engine speed quickly when the first ignition is performed.

The control unit 21 sets the ignition timing of the second to fourth ignitions in the restart operation during vehicle travel to a retarded ignition timing. The retarded ignition timing is an ignition timing retarded from the advanced ignition timing. The control unit 21 sets the retarded ignition timing as an ignition timing, which cannot lead to an instantaneous rotational speed of the crankshaft at the time of the ignition to the decreased speed until the next ignition.

Accordingly, in the internal combustion engine 10, the engine speed gradually increases when the second to fourth ignitions are performed.

The control unit 21 sets the ignition timing of the fifth and subsequent ignitions in the restart operation during vehicle travel to an assist ignition timing. The assist ignition timing is an ignition timing retarded from the MBT (optimum ignition timing) and advanced from the advanced ignition timing. The control unit 21 sets the fifth and subsequent ignitions to the assist ignition timing as an ignition timing for relief when the engine speed does not reach the start completion determination speed even when the first to fourth ignitions are completed.

Therefore, in the internal combustion engine 10, even when the engine speed by the first to fourth ignitions did not reach the start completion determination speed, the engine speed rapidly increases by performing the fifth and subsequent ignitions.

Fig. 2 shows a flow of specific processing of the ignition timing control during restart in the restart operation during vehicle travel. The control unit 21 repeatedly performs the series of processes shown in the flowchart in Fig. 2 when the restart operation during vehicle travel is performed.

When the ignition timing control during restart is initiated, at first, the control unit 21 determines whether the engine speed of the internal combustion engine 10 reaches the start completion determination speed (step S11). When it is determined that the engine speed does not reach the start completion determination speed (step S11: NO), the control unit 21 determines whether an ignition to be performed from the present time is a first ignition in the restart operation during vehicle travel (step S12). When it is determined that the ignition to be performed from the present time is the first ignition (step S12: YES), the control unit 21 sets the ignition timing of the first ignition to the advanced ignition timing (step S13).

In step S12, when it is determined that the ignition to be performed from the present time is not the first ignition (step S12: NO), the control unit 21 determines whether the ignition to be performed from the present time is either of the second ignition, the third ignition and the fourth ignition (step S14).

When it is determined that the ignition to be performed from the present time is any one of the second to fourth ignitions after the initiation of the restart operation during vehicle travel (step S14: YES), the control unit 21 sets the ignition timing to the retarded ignition timing (step S15). When it is determined that the ignition to be performed from the present time is not the second to fourth ignitions after the initiation of the restart operation during vehicle travel (step S14: NO), the control unit 21 sets the ignition timing of the fifth and subsequent ignitions, which is a fifth ignition after the initiation of the restart operation during vehicle travel, to the assist ignition timing (step S16).

When it is determined in step S11 that the engine speed is the start completion determination speed or more (step S11: YES), the control unit 21 terminates the ignition timing control during restart. The restart operation during vehicle travel is also terminated at this time.

The control unit 21 performs ignition in the restart operation during vehicle travel based on the ignition timing, which is set by performing the above-mentioned ignition timing control during restart. For example, the control unit 21 performs the first, second, third, and fourth ignitions with respect to the four cylinders arranged as first to fourth cylinders in the order of the first cylinder, the second cylinder, the third cylinder, and the fourth cylinder. In other words, the ignitions sequentially performed from the first ignition are successively performed with respect to the four cylinders.

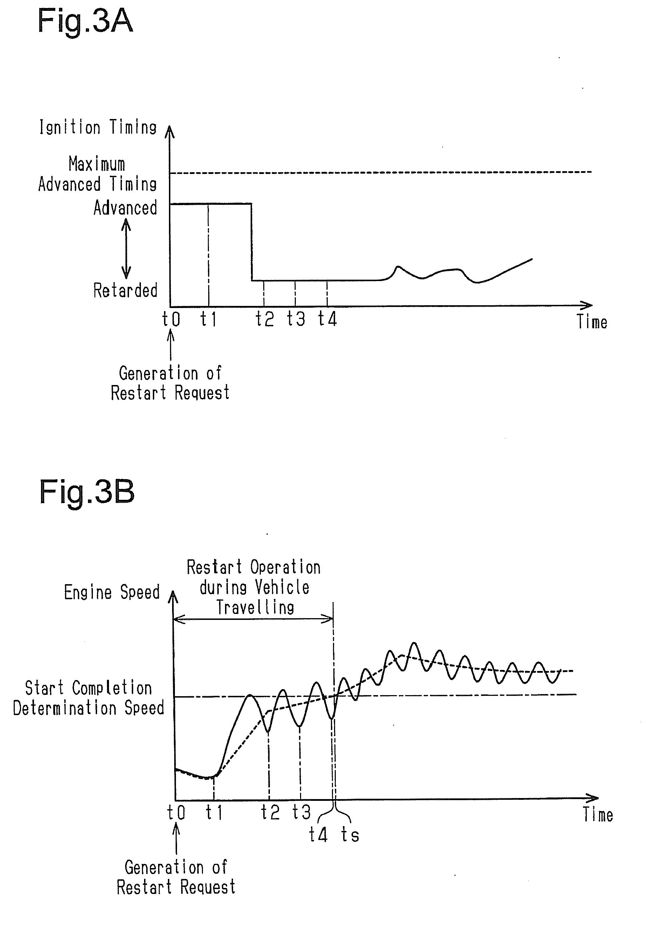

Hereinafter, operations when performing the ignition timing control during restart will be described with reference to Figs. 3A to 4B.

Referring to Figs. 3A and 3B, discussion will be made on the restart operation during vehicle travel in a case in which the engine speed reaches the start completion determination speed by performing the fourth ignition.

Fig. 3A shows an example of the change in the ignition timing in the restart operation during vehicle travel in a case in which the engine speed reaches the start completion determination speed by performing the fourth ignition.

A solid line in Fig. 3B shows an instantaneous rotational speed of the crankshaft. A dotted line in Fig. 3B shows the engine speed.

As shown in Fig. 3B, when it is determined that the restart request generates at time t0 while the vehicle is travelling, the control unit 21 starts the restart operation during vehicle travel. Together with this restart operation during vehicle travel, the control unit 21 repeatedly performs the ignition timing control during restart and sets the ignition timing as shown in Fig. 3A.

Specifically, as shown in Fig. 3A, when it is determined that the restart request generates at time t0, the control unit 21 sets the ignition timing to the advanced ignition timing. Then, after performing the first ignition at time t1, the control unit 21 sets the ignition timing to the retarded ignition timing and performs the second ignition at time t2, the third ignition at time t3, and the fourth ignition at time t4, respectively.

As shown in Fig. 3B, this operation performs at time t1 the combustion by the first ignition set to the advanced ignition timing and promptly raises the engine speed having been lowered until the first ignition is performed.

Therefore, the engine speed lower than the resonance rotational speed range at the time of the initiation of the restart operation during vehicle travel (time t0) is promoted to be raised so as to pass through the resonance rotational speed range within the short time of period (after the performing of the first ignition and before the performing of the second ignition).

In the second to fourth ignitions at time t2 to time t4 performed subsequent to the first ignition at time t1, the ignition timing is set to the retarded ignition timing, which is retarded from the advanced ignition timing in the first ignition. Therefore, torque generated with the combustions by the second to fourth ignitions is smaller than the torque generated with the combustion by the first ignition. Therefore, the engine speed gradually increases at time t2 to time t4 compared with time t1 to time t2.

This operation suppresses the rapid increase in the engine speed, and thereby suppresses the rapid increase in the travelling speed of the vehicle 1. Accordingly, the shock due to the restart operation during vehicle travel is less likely to occur in the vehicle 1.

When the engine speed reached the start completion determination speed at time ts, the control unit 21 terminates the ignition timing control during restart and terminates the restart operation during vehicle travel. In a period after the restart operation during vehicle travel was completed, the control unit 21 controls the engine speed based on the operation signal from the accelerator pedal position sensor 22.

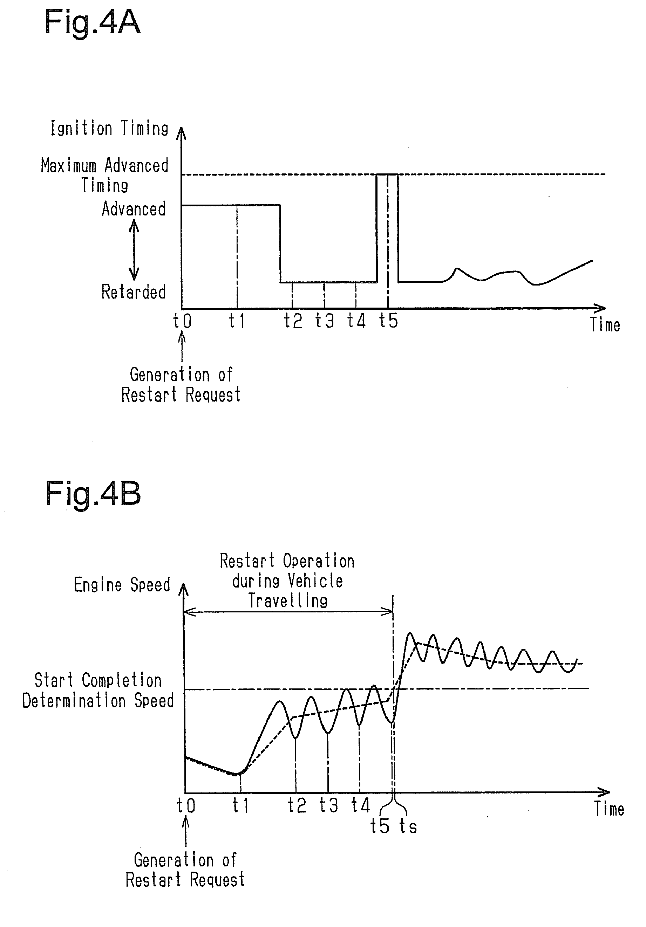

Next, referring to Figs. 4A and 4B, discussion will be made on a restart operation during vehicle travel in a case in which the engine speed does not reach the start completion determination speed after the fourth ignition was completed.

Fig. 4A shows an example of the change in the ignition timing in the restart operation during vehicle travel in the case in which the engine speed does not reach the start completion determination speed after the fourth ignition was completed.

A solid line in Fig. 4B shows an instantaneous rotational speed of the crankshaft. A dotted line in Fig. 4B shows the engine speed.

As shown in Fig. 4A, when the engine speed did not reach the start completion determination speed after the fourth ignition was performed at time t4, the control unit 21 sets the ignition timing of the fifth ignition to the assist ignition timing. Then, the control unit 21 performs the fifth ignition at time t5.

Accordingly, as shown in Fig. 4B, the engine speed more rapidly increases by large torque generated with the combustion by the fifth ignition at time t5. Therefore, the control unit 21 shortens the period of time required until the engine speed reaches the start completion determination speed. This operation completes the engine start operation more reliably.

When the engine speed does not reach the start completion determination speed even when the fifth ignition is completed, the control unit 21 continues to set the ignition timing to the assist ignition timing until the engine start is completed and performs the ignition of the sixth ignition and subsequent.

The control unit 21 has the following advantages.
(1) The control unit 21 sets the ignition timing of the first ignition, which is the first ignition in the restart operation during vehicle travel, to the ignition timing advanced from the ignition timing of the second ignition in the restart operation during vehicle travel. Since the ignition timing of the first ignition in the restart operation during vehicle travel is set to the advanced ignition timing, the engine speed is promoted to increase based on the first ignition. The present invention shortens the period of time required for the engine speed passing through the resonance rotational speed range. Therefore, the present invention suppresses the occurrence of the resonance in the internal combustion engine 10 in the restart operation during vehicle travel.
(2) The control unit 21 sets the ignition timing of the second to fourth ignitions to the ignition timing retarded from the ignition timing of the first ignition. The present invention moderates the increase in the engine speed based on the ignitions performed up to the fourth ignition after the first ignition in the restart operation during vehicle travel as compared with the increase in the engine speed based on the first ignition. Therefore, the shock in the vehicle 1 is less likely to occur in the restart operation during vehicle travel, as compared with the case in which the ignition timing of the ignition up to the fourth ignition performed after the first ignition is not retarded from the ignition timing of the first ignition.
(3) When the engine speed does not reach the start completion determination speed even when the fourth ignition was performed, the control unit 21 sets the ignition timing of the fifth ignition to the assist ignition timing so as to advance the ignition timing of the fifth ignition from the ignition timing of the fourth ignition. Since the ignition timing of the fifth ignition is advanced, the engine speed is likely to increase. Therefore, as compared with the case in which the ignition timing is not advanced, the present invention shortens the period of time required for the engine speed reaching the start completion determination speed.
(4) The control unit 21 sets the advanced ignition timing of the fifth ignition to the ignition timing advanced from the advanced ignition timing, which is the ignition timing of the first ignition. Therefore, as compared with the case in which the ignition timing of the fifth ignition is set to the ignition timing retarded from the ignition timing of the first ignition, the engine speed is more likely to increase with the combustion by the fifth ignition. The present invention further shortens the period of time required for the engine speed reaching the start completion determination speed.

### Other Embodiments

- In the above embodiment, when setting the ignition timing of the second to fourth ignitions to the ignition timing retarded from the ignition timing of the first ignition, the increase in the engine speed can be moderated as compared with the increase in the engine speed by the first ignition, and thereby suppressing the shock in the vehicle. That is, the ignition timing of the second to fourth ignitions may be any ignition timing as long as retarded from the ignition timing of the first ignition and does not need all be set to the retarded ignition timings. For example, a part of the ignition timing of the second to fourth ignitions may be set to the retarded ignition timing in the restart operation during vehicle travel, and the ignition timing of other ignitions may be set to the ignition timing between the advanced ignition timing and the retarded ignition timing. However, in order to suppress the shock in the vehicle, it is preferable to set all of the ignition timing of the second to fourth ignitions to the retarded ignition timing same as in the above embodiment. It is preferable to increase the engine speed based on the ignitions of the second to fourth ignition as gradual as possible.
- The above embodiment describes an example of setting the ignition timing after the fifth ignition to the assist ignition timing serving as the ignition timing for relief. The timing for switching the ignition timing to the assist ignition timing can be appropriately changed. For example, it is possible to adopt a configuration in which the ignition timing of the third ignition and subsequent is set to the assist ignition timing, or a configuration in which the ignition timing of the fourth ignition and subsequent is set to the assist ignition timing. In addition, it is possible to adopt a configuration in which the ignition timing of the ignitions up to the fifth ignition is set to the retarded ignition timing and the ignition timing of the sixth ignition and subsequent is set to the assist ignition timing. That is, the N times ignition defined by N, which is any positive integer equal to and more than two, may be set to the second ignition, the third ignition, or any ignition after the fifth ignition.
- The assist ignition timing is not necessarily be set to a maximum advanced timing. That is, the assist ignition timing may be an ignition timing that is advanced to encourage completion of the engine starting when it is not possible to complete the engine starting by the ignition of the second ignition and subsequent that is set to the ignition timing retarded from the ignition timing of the first ignition. In short, the assist ignition timing may be any ignition timing advanced from the ignition timing of the second ignition and subsequent, which moderates the increase in the engine speed, and can be appropriately changed. For example, the control unit 21 may set the assist ignition timing, which is set as the ignition timing of the fifth ignition and subsequent, to an ignition timing advanced from the retarded ignition timing set as the ignition timing of the second to fourth ignitions and retarded from the advanced ignition timing set as the ignition timing of the first ignition.
- In the restart operation during vehicle stops, the control unit 21 may release the maintained braking force after elapsing a predetermined period of time from the restart of the fuel injection and the restart of the ignition by the spark plug 11.
- It is possible to further moderate the increase in the engine speed by controlling an intake negative pressure and a fuel injection amount in addition to the setting of the ignition timing according to the ignition timing control during restart. For example, the control unit 21 maintains the opening degree of the throttle valve, which has been closed from when the combustion of the internal combustion engine 10 is stopped in the restart operation during vehicle travel. The control unit 21 opens the throttle valve after the completion of the engine starting. This operation decreases the pressure in the intake manifold in the internal combustion engine 10 according to the restart operation during vehicle travel. This operation further moderates the increase in the engine speed.

The control unit 21 controls the combustion in the internal combustion engine 10 so as to be stratified charge combustion in the restart operation during vehicle travel. The control unit 21 sets the fuel injection timing and the fuel injection amount to a fuel injection timing and a fuel injection amount, which lower the increase in the engine speed in the restart operation during vehicle travel. This operation further moderates the increase in the engine speed.
- The above embodiment describes an example that determines the generation of the automatic stop request or the restart request based on the state of depression of the accelerator pedal 31 and the state of depression of the brake pedal 32. The manner for determining the generation of the automatic stop request and the restart request may be appropriately changed. For example, the vehicle 1 may include a manual accelerator lever served as a travelling request inputting operation portion and a manual brake lever served as the travelling request inputting operation portion in place of or in addition to the accelerator pedal 31 and the brake pedal 32. In this configuration, it is possible to perform a determination based on the state of the operation of these accelerator lever and brake lever.

## Claims

1. A stop and start control device (21) for an internal combustion engine (10), wherein:
the stop and start control device (21) is configured to perform an automatic stop control for stopping combustion in the internal combustion engine (10) while a vehicle (1) is travelling, **characterized in that**:
the stop start control device (21) is configured to initiate a restart operation during vehicle travel when a restart request generates before the vehicle (1) stops in a state in which the combustion in the internal combustion engine (10) has been stopped by the automatic stop control, wherein the restart operation during vehicle travel is a restart operation for the internal combustion engine (10) while the vehicle (1) is travelling; and
the stop and start control device (21) is configured to set an ignition timing of a first ignition in the restart operation during vehicle travel to an ignition timing advanced from an ignition timing of a second ignition in the restart operation during vehicle travel.

2. The stop and start control device (21) for an internal combustion engine (10) according to claim 1, **characterized in that**
the stop and start control device (21) is configured to set an ignition timing of the ignition, which is after the first ignition and up to N times ignition in the restart operation during vehicle travel to an ignition timing retarded from the ignition timing of the first ignition,
the N times ignition is defined by N, which is any positive integer equal to or more than two.

3. The stop and start control device (21) for an internal combustion engine (10) according to claim 2, **characterized in that**
the stop and start control device (21) is configured to determine the completion of the starting of the internal combustion engine (10) when the engine speed reached the start completion determination speed, and
the stop and start control device (21) is configured to set an ignition timing of the ignition of N+1 times, which is next to the ignition of the N times, to an ignition timing retarded from the ignition timing of the N times ignition.

4. The stop and start control device (21) for an internal combustion engine (10) according to claim 3, **characterized in that**
the stop and start control device (21) is configured to set the ignition timing of the N+1 times ignition to an ignition timing advanced from the ignition timing of the first ignition.
